(19) Europäisches Patentamt / European Patent Office / Office européen des brevets

(11) **EP 1 635 149 B1**

(12) **FASCICULE DE BREVET EUROPEEN**

(45) Date de publication et mention
de la délivrance du brevet:
**26.05.2010   Bulletin 2010/21**

(51) Int Cl.:
**G01D 5/34** *(2006.01)*      **B60T 13/72** *(2006.01)*

(21) Numéro de dépôt: **05018351.6**

(22) Date de dépôt: **24.08.2005**

(54) **Système de détection optique d'une commande de freinage de véhicule**

Einrichtung zur optischen Detektion der Betätigung der Bremsen eines Fahrzeugs

System to optically detect the actuation of the brake in a vehicle.

(84) Etats contractants désignés:
**AT BE BG CH CY CZ DE DK EE ES FI FR GB GR HU IE IS IT LI LT LU LV MC NL PL PT RO SE SI SK TR**

(30) Priorité:  **02.09.2004   FR 0409284**

(43) Date de publication de la demande:
**15.03.2006   Bulletin 2006/11**

(73) Titulaire: **ROBERT BOSCH GMBH**
**70442 Stuttgart (DE)**

(72) Inventeurs:
• **Richard, Philippe**
**77500 Chelles (FR)**

• **Masson, Olivier**
**75019 Paris (FR)**

(74) Mandataire: **Hurwic, Aleksander Wiktor**
**Bosch Systemes de Freinage,**
**Service Brevets,**
**126, rue de Stalingrad**
**93700 Drancy (FR)**

(56) Documents cités:
**DE-C1- 3 226 579      FR-A- 2 834 254**
**GB-A- 1 446 792      US-A- 3 293 849**
**US-A- 5 217 280      US-A- 6 050 649**

**Description**

L'invention concerne un système de détection d'une commande de freinage de véhicule notamment pour véhicule automobile.

Dans les véhicules automobiles l'actionnement de la pédale de frein par le conducteur et par suite la commandé de freinage qui peut en résulter est détectée, dans les systèmes connus, par différents systèmes. Dans les systèmes les plus anciens un contact électrique, commandé généralement par la tige de commande de la pédale de frein, est inséré dans un circuit et permet par ouverture et fermeture de ce circuit électrique de signaler la commande de la pédale de frein. D'autres systèmes utilisent également des systèmes magnétiques et utilisent des variations de champ magnétiques induites.

Ces systèmes ne forment généralement pas un ensemble compact avec un organe du système de freinage. De plus, ils délivrent généralement un signal analogique.

L'invention fournit un système facile à intégrer dans le système de freinage du véhicule et formant un ensemble compact avec un organe du système de freinage (avec le servomoteur d'assistance au freinage par exemple). Lors d'une détection, il délivre un signal numérique facile à traiter par des circuits électriques. De plus, il ne nécessite pas de contact électrique dont les surfaces de contacts peuvent se polluer ou se détériorer.

L'invention concerne, donc un système de détection optique de la commande de freinage d'un véhicule comprenant une pièce mobile de commande de freinage, dans lequel un dispositif de détection optique détecte la position de ladite pièce mobile.

Le document FR-A-2834254 décrit un système de détection optique de la commande de freinage d'un véhicule. Ce document est considéré comme état de la technique plus proche.

Ce système de détection optique est munie d'une source lumineuse et un dispositif photodétecteur. La source lumineuse émet un faisceau lumineux vers ladite pièce mobile de telle sorte que lorsque le système de freinage est au repos, la pièce mobile réfléchit le dit faisceau lumineux vers le dispositif photodétecteur.

Selon une autre forme de réalisation, le dispositif de détection est également muni d'une source lumineuse et d'un dispositif photodétecteur mais la source lumineuse émet un faisceau lumineux vers le dispositif photodétecteur. Ladite pièce mobile ou une pièce qui lui est solidaire est située entre la source lumineuse et le dispositif photodétecteur lorsque le système de freinage est au repos, de telle sorte que lorsque le système de freinage est au repos, le dispositif photodétecteur n'est pas éclairé par le faisceau lumineux et que lorsque le système de freinage est actif, le photodétecteur est éclairé par le faisceau lumineux ou inversement.

L'invention est applicable à un système de freinage comportant un servomoteur d'assistance au freinage couplant une tige de commande à une tige de poussée et comprenant une jupe séparant une chambre avant d'une chambre arrière du servomoteur. Le dispositif de détection est fixé à une paroi du servomoteur de façon que la source lumineuse éclaire la jupe du servomoteur.

Avantageusement, la zone de la jupe qui est éclairée par la source lumineuse lorsque le servomoteur est à l'état de repos, comporte une surface réfléchissante.

Dans le cas où le système prévoit une pièce destinée à se placer entre la source lumineuse et le dispositif photodétecteur et dans le cas où le système de freinage comporte un servomoteur d'assistance au freinage couplant ladite tige de commande à ladite tige de poussée et comprenant une jupe séparant une chambre avant d'une chambre arrière du servomoteur, on peut prévoir que ladite pièce mobile forme saillie à la surface de la jupe ou est commandée par les déplacements de la jupe. Le dispositif de détection peut être également fixé à une paroi du servomoteur.

De façon générale, de préférence, le dispositif de détection est fixé dans ou sur la paroi arrière du servomoteur.

La paroi peut comporter alors une ouverture et le dispositif de détection est fixé dans cette ouverture. Un dispositif d'étanchéité est prévu entre le dispositif de détection et les bords de l'ouverture.

Dans le cas ou la pièce mobile est un élément commandé par les déplacements de la jupe, le système peut comporter un levier mobile en rotation autour d'une articulation fixée à une paroi du servomoteur. Ce levier comprend un bras d'occultation, un bras de levier et un ressort de rappel. Ainsi, lorsque le système de freinage est au repos, la jupe appui sur le bras de levier et le bras d'occultation est situé entre la source lumineuse et le dispositif photodétecteur tandis que lorsque le système de freinage est actif, le ressort commande la rotation du levier de façon que le bras d'occultation s'écarte de la source lumineuse et du dispositif photodétecteur.

Avantageusement, la source lumineuse et le photodétecteur sont contenus dans un boîtier possédant une ouverture qui est orientée vers la jupe et qui est quasiment en contact avec celle-ci lorsque le servomoteur est à l'état de repos.

On peut également prévoir que la source lumineuse émet ledit faisceau lumineux vers la pièce mobile par l'intermédiaire d'un premier guide optique et en ce que le dispositif photodétecteur reçoit par un deuxième guide optique, la lumière réfléchie par la pièce mobile.

De même, dans un système dans lequel un élément d'une pièce mobile peut être placé entre la source lumineuse et le dispositif photodétecteur, on peut prévoir que la source lumineuse émet ledit faisceau lumineux par l'intermédiaire d'un premier guide optique et en ce que le dispositif photodétecteur reçoit, par un deuxième guide optique, le faisceau lumineux émis par la source lumineuse.

Avantageusement, ces guides optiques sont réalisés sous forme de fibres optiques, une première extrémité de chaque guide étant dirigée vers la pièce mobile, tandis qu'une deuxième extrémité de chaque guide est couplée optiquement à la source lumineuse ou au dispositif photodétecteur.

Les différents aspects et caractéristiques de l'invention apparaîtront plus clairement dans la description qui va suivre et dans les figures annexées qui représentent :

- la figure 1, un exemple général de réalisation d'un système de détection optique d'une commande de freinage pour véhicule,
- les figures 2a et 2b, exemple de réalisation du système de l'invention,
- les figures 2c et 2d, une variante de réalisation du système de l'invention,
- les figures 3a et 3b, des schémas illustrant le fonctionnement du système de l'invention,
- les figures 4a et 4b, des exemples de réalisation détaillés du système des figures 2a et 2b,
- la figure 5a, un exemple de réalisation détaillé du système des figures 3a et 3b,
- les figures 5b et 5c, une variante de réalisation du système de la figure 5a,
- la figure 6, une variante de réalisation du système de l'invention,
- les figures 7a et 7b, des circuits électroniques associés à la photodiode et au photodétecteur du système de l'invention.

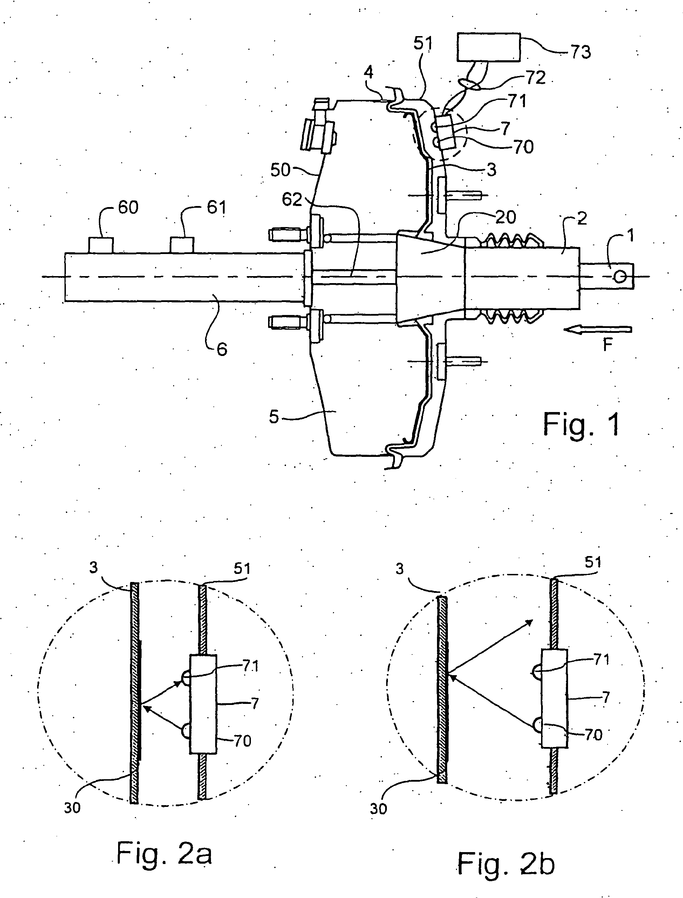

En se reportant à la figure 1, on va donc décrire tout d'abord un exemple général de réalisation du système de détection selon l'invention appliqué à un véhicule automobile.

Un système de freinage d'un véhicule automobile comporte couramment un servomoteur d'assistance au freinage 5 commandé par une tige de commande 1 laquelle est actionnée par la pédale de frein (non représentée) du véhicule. Comme cela est connu dans la technique, la tige de commande 1 provoque le déplacement d'un ensemble de vanne trois voies 2 et de piston 20. Le piston 20 est solidaire d'une jupe 3 interne au servomoteur et qui sépare, avec une membrane d'étanchéité 4, la chambre avant de la chambre arrière du servomoteur. Une tige de poussée 62 permet de transmettre les efforts de freinage du piston 20 au maître cylindre 6. Celui-ci transmet par des sorties 60 et 61, des efforts de freinage au circuit hydraulique de freinage du véhicule. Un tel dispositif est parfaitement connu dans la technique et ne nécessite pas d'explication supplémentaire.

On rappelle simplement que lors d'une commande de freinage, la jupe du servomoteur se déplace selon la flèche F entre la paroi avant 50 et la paroi arrière 51 du servomoteur.

Selon l'invention, on prévoit de disposer dans le servomoteur, un dispositif de détection optique du déplacement de la jupe du servomoteur.

Selon l'exemple représenté sur la figure 1, un dispositif de détection 7 est placé sur ou dans la paroi arrière 51 du servomoteur. Ce dispositif 7 comporte une source lumineuse 70 émettant un faisceau lumineux vers la jupe 3. Il comporte également un photodétecteur 71 capable de détecter la lumière réfléchie par la jupe. De La source lumineuse peut être une diode émettrice ou diode électroluminescente émettant de préférence dans l'infrarouge pour s'affranchir des interférences de la lumière du jour en utilisant par exemple un filtre infrarouge. Le faisceau émis est si possible un faisceau peu divergent. Le photodétecteur 71 est une photodiode ou un phototransistor.

La diode émettrice 70 est orientée de telle façon que lorsque le servomoteur est au repos, et donc lorsque la jupe est repoussée vers la droite (sur la figure 1), le faisceau lumineux qu'elle émet est réfléchi par la jupe vers la surface active du photodétecteur 71.

Ainsi, selon l'exemple de réalisation de la figure 1, lorsque le servomoteur est en position de repos, le faisceau lumineux émis par la diode émettrice 70 est réfléchi par la jupe vers le photodétecteur 71. Celui-ci indique à un dispositif indicateur 73 qui lui est connecté par les fils électriques 71 et 72 que les freins du véhicule ne sont pas actionnés.

Lorsque la tige de commande est actionnée et déplacée selon la flèche F, la jupe 4 se déplace vers la gauche et s'écarte de la diode émettrice. Le faisceau émis par celle-ci et qui se réfléchi sur la jupe n'atteint plus le photodétecteur 71. Le dispositif indicateur 73 est donc informé que les freins du véhicule sont actionnés et peut fournir une signalisation de freinage.

Les figures 2a et 2b représentent en détails le dispositif de la figure 1. Le dispositif de détection est monté dans la paroi arrière 51 du servomoteur. Si la jupe 3 ou la membrane qui la recouvre éventuellement n'est pas suffisamment réfléchissante, on peut prévoir un dispositif réfléchissant, telle qu'une plaque ou une membrane réfléchissante 30.

En position de repos représentée en figure 2a, le faisceau lumineux émis par la diode émettrice est réfléchi par la plaque réfléchissante 30, vers le photodétecteur 71. La figure 2b représente le système lorsque la commande de frein est actionnée. La jupe 3 s'est alors écarté du dispositif de détection 7. Le faisceau émis par la diode émettrice et réfléchi par la plaque 30 n'atteint plus le photodétecteur 71.

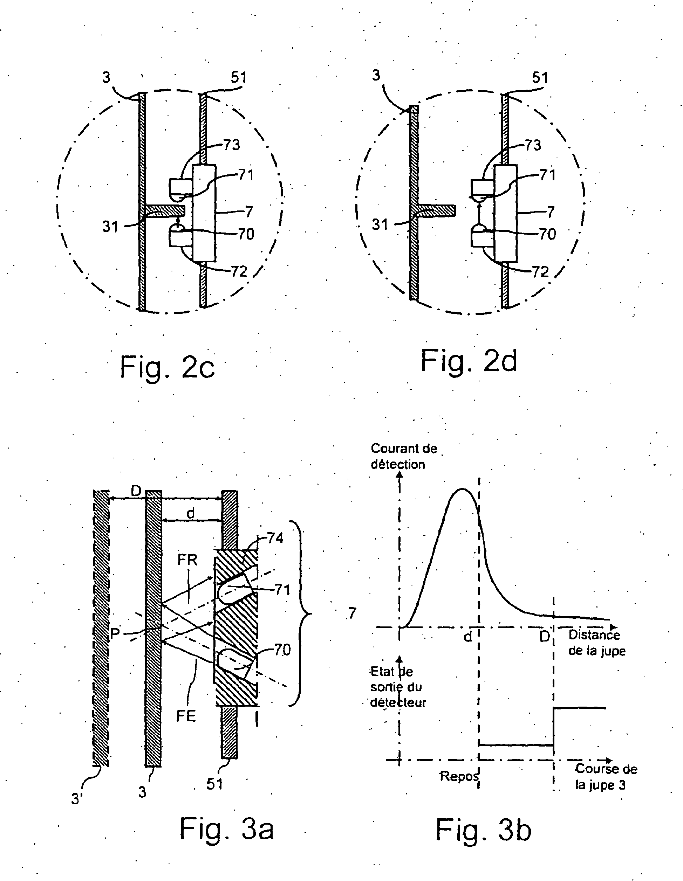

Les figures 2c et 2d représentent une variante de réalisation du système de détection selon l'invention. Dans cette variante de réalisation, le système ne fonctionne plus par réflexion, d'un faisceau lumineux sur une surface de la jupe 3 mais par transmission directe d'un faisceau lumineux de la diode émettrice 70 vers le photodétecteur 71. La jupe 3 possède un élément 31 formant saillie à la surface de la jupe de telle façon que lorsque le servomoteur est au repos, l'élément 31 est situé entre la diode émettrice 70 et le photodétecteur 71 (figure 2c). La lumière émise par la diode émettrice 70 n'atteint donc pas le photodétecteur 71. Par contre, lorsque la commande de freinages est actionnée, la jupe 3 et l'élément 31 s'écarte du dispositif de détection. L'élément 31 n'étant plus entre la diode émettrice 70 et le photodétecteur 71 (figure 2d), la lumière émise par la diode émettrice atteint le photodétecteur. Le dispositif indicateur 73 peut ainsi être informé de la commande de freinage et fournir une signalisation appropriée.

Dans les exemples de réalisation qui précèdent le dispositif de détection est fixé sur la paroi arrière 51 du servomoteur, mais il pourrait être fixé en un autre endroit du servomoteur, sur la paroi avant par exemple.

Egalement, dans les exemples qui précèdent, on a considéré que le système de détection de l'invention détecte le déplacement de la jupe du servomoteur. Selon des variantes de réalisation non représentées, le dispositif de détection pourrait détecter le déplacement de d'autres organes du système de freinage. Dans ce cas, le dispositif de détection est monté sur un organe fixe du véhicule. Dans le cas du système de la figure 2a, la surface réfléchissant le faisceau lumineux émis par la diode émettrice appartient à une organe mobile du système de freinage. Dans le cas du système de la figure 2c, l'élément qui interrompt la transmission du faisceau lumineux émis par la diode émettrice appartient à un organe mobile du système de freinage.

L'avantage des systèmes décrits en relation avec les figures 1 et 2a à 2d est que les dispositifs optiques (diode émettrice et photodétecteur) sont à l'abri de la pollution ambiante à l'intérieur du servomoteur.

Les figures 3a et 3b représentent le fonctionnement du dispositif des figures 2a et 2b. Le dispositif de détection 7 comporte une pièce de fixation 74 qui est placée dans la paroi 51 du servomoteur et qui contient la diode émettrice 70 et le photodétecteur 71. La diode émettrice 70 émet un faisceau FE qui éclaire la jupe 3. Lorsque le servomoteur est à l'état de repos, la jupe est dans la position représentée sur la figure 3a et est à une distance d de la paroi arrière 51. La jupe réfléchit un faisceau FR vers le photodétecteur 71. Sur le graphique de la figure 3b, on est au maximum ou proche du maximum de détection du photodétecteur avec un courant de détection maximal. La sortie du détecteur est dans un premier état déterminé.

Lorsque le système de freinage devient actif, la jupe 3 s'écarte de la paroi arrière 51 (position en pointillés sur la figure 3a), et lorsque la jupe est à une distance D, le faisceau réfléchi FR sur le photodétecteur est atténué. Le courant de détection est minimal. La sortie du détecteur est dans un deuxième état déterminé.

On voit donc que le système de l'invention permet de détecter l'actionnement du dispositif de freinage d'un véhicule. L'explication du fonctionnement du système des figures 2a et 2b faite en relation avec les figures 3a et 3b serait applicable au système des figures 2c et 2d. La détection d'un maximum de lumière se fait alors, dans le système des figures 2c et 2d, lorsque la jupe 3 est avancée contrairement au système des figures 2a et 2b.

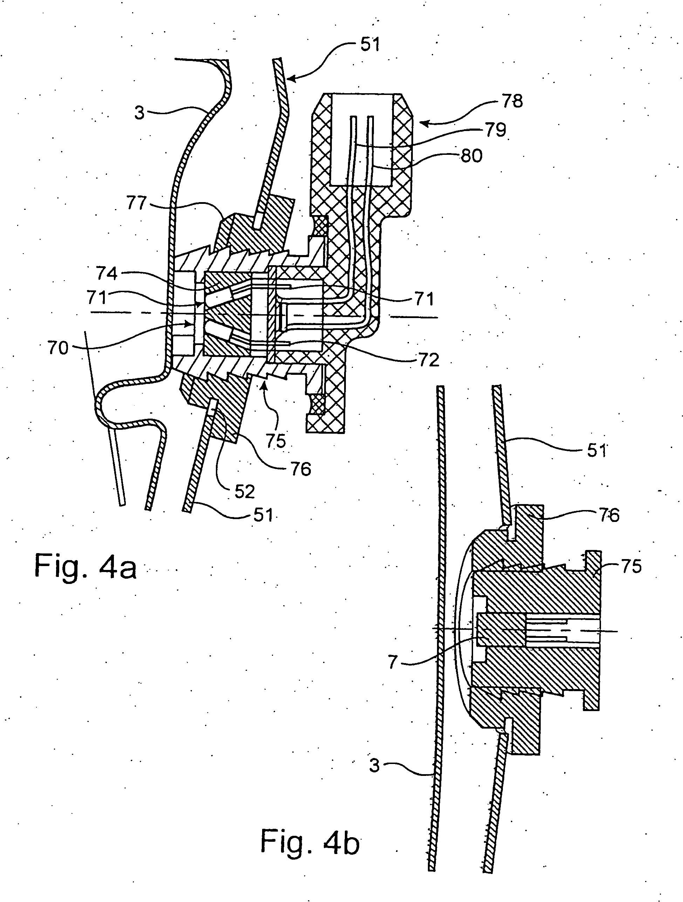

La figure 4a représente un système de montage d'un dispositif de détection dans une ouverture 52 de la paroi arrière 51 du servomoteur.

La diode émettrice 70 et le photodétecteur sont contenus dans une pièce de maintien 74. Cette pièce de maintien est placée dans un boîtier 75.

La paroi 51 comporte une ouverture 52 dans laquelle est montée une rondelle d'étanchéité en caoutchouc, en matériau polymère ou en matériau similaire. Le boîtier 75 est monté de manière étanche dans l'ouverture 52 à l'aide de la rondelle 76.

Selon l'exemple de réalisation de la figure 4a, le boîtier 75 est monté dans l'ouverture 52 de manière que son extrémité 77 soit située à proximité de la jupe 3 lorsque le servomoteur est à l'état de repos. Ainsi, lorsque la jupe est dans la position représentée sur la figure 4a (état de repos), le maximum de lumière émise par la diode émettrice est reçue et détectée par le photodétecteur.

Par ailleurs, un boîtier de connexion 78 est adapté sur la partie du boîtier 75 qui émerge de la paroi 51 du servomoteur. Les fils de connexion 71, 72 sont connectés à des broches 79, 80 de façon à permettre la connexion d'un dispositif indicateur à l'aide d'une fiche embrochable.

La figure 4b représente en coupe le dispositif de la figure 4a mettant en évidence le montage étanche du détecteur dans la paroi 51 du servomoteur.

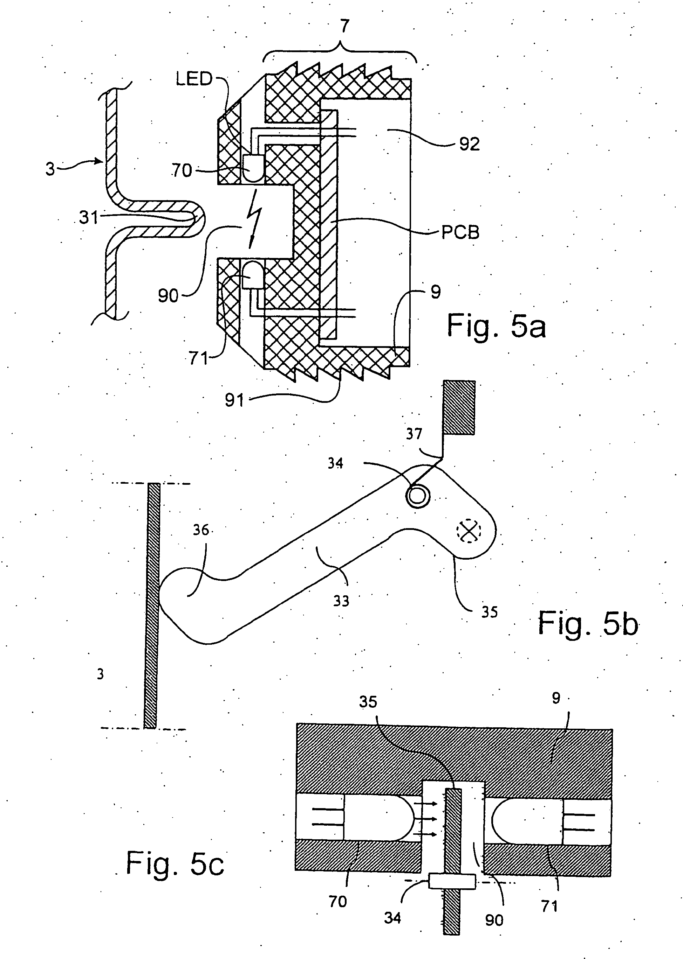

En se reportant à la figure 5a, on va maintenant décrire un exemple de réalisation détaillé du système des figures 2c et 2d.

La diode émettrice 70 et le photodétecteur 71 sont montés dans une pièce de maintien 9 de telle façon que leurs surfaces actives sont situées dans une cavité 90 de la pièce 9 et se font face. La diode émettrice 70 émet un faisceau lumineux qui est destiné à éclairer le photodétecteur 71. La partie périphérique de la pièce 9 comporte une surface en forme de sapin 91 destinée à être montée de façon étanche dans une ouverture de la paroi 51 de manière similaire au boîtier 75 de la figure 4a. La partie 92 destinée à émerger de la paroi 51 du servomoteur à l'extérieur de celui-ci, lorsque le dispositif est monté, est prévue pour recevoir un dispositif de connexion électrique.

Par ailleurs, la jupe 3 possède une partie en saillie 31. Par exemple, la jupe 3 est en métal et cette saillie est réalisée par emboutissage. Cette saillie est destinée se placer dans la cavité 90, lorsque le servomoteur est au repos, pour interrompre la transmission du faisceau lumineux émis par la diode émettrice vers le photodétecteur.

Les figures 5b et 5c représentent une variante de réalisation du système de la figure 5a Le dispositif de détection 7 est similaire à celui de la figure 5a. Par contre la jupe ne comporte pas la partie en saillie 31.

Un levier 33 est mobile en rotation autour d'un axe de rotation 34. L'axe de rotation 34 est fixé à la pièce 9. Le levier 33 comporte un bras d'occultation 35 destiné à se placer dans la cavité 90 entre la diode émettrice et le photodétecteur lorsque le servomoteur est à l'état de repos. Le levier 33 possède également un bras de levier destiné à être actionné par le déplacement de la jupe 3. Enfin un ressort de rappel 37, par exemple hélicoïdal, permet de faire tourner le levier 33 de telle sorte que le bras d'occultation s'écarte de la cavité 90 lorsque le circuit de freinage est activé et donc lorsque la jupe 3 s'écarte de la paroi 51.

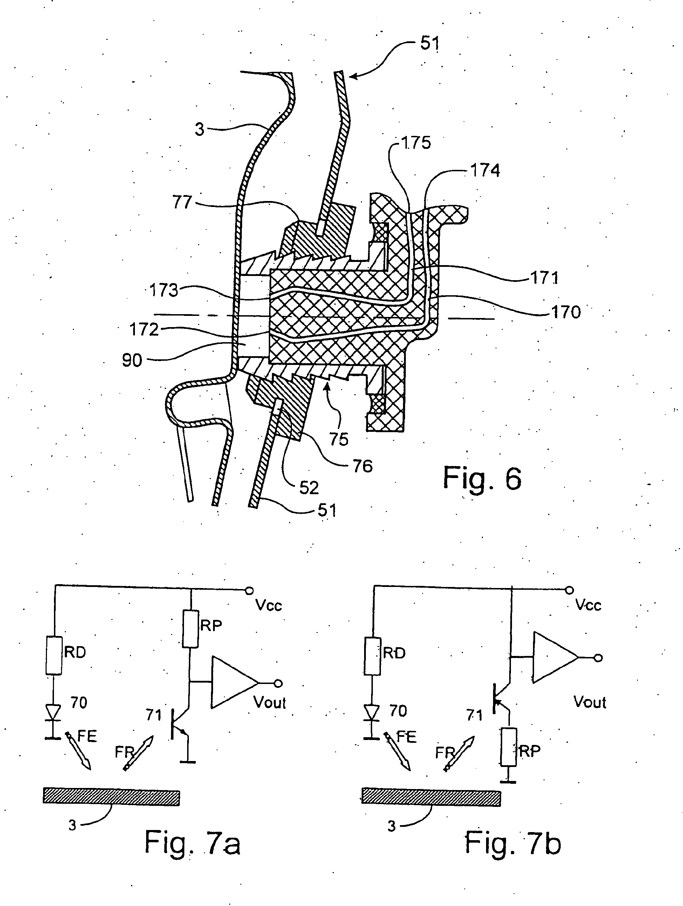

La figure 6 représente une variante de réalisation de l'invention dans laquelle il est prévu des guides de lumière 170 et 171 permettant de déporter la diode émettrice et le photodétecteur. Ces guides de lumière sont par exemple des fibres optiques en polycarbonate acrylique par exemple. Les extrémités 172 et 173 des guides de lumière sont convenablement orientée vers la surface de la jupe 3 de telle façon que lorsque le servomoteur est au repos, la lumière émise par l'extrémité 172 du guide de lumière 170 soit réfléchie vers l'extrémité 173 du guide lumière 171. Les extrémités 174 et 175 des guides de lumière 170 et 171 sont respectivement couplée optiquement à une diode émettrice (telle que la diode émettrice 70 précédente) et à un photodétecteur 71 (tel que le photodétecteur 71 précédent) par des moyens non représentés et connus dans la technique.

En se reportant aux figures 7a et 7b, on va maintenant décrire des exemples de réalisation des circuits électriques associés à la diode émettrice et au photodétecteur.

La diode émettrice 70 est alimentée par un courant IF à travers une résistance RD entre une tension Vcc et la terre. Elle émet un faisceau lumineux qui est réfléchi par la jupe 3 vers le photodétecteur 71.

Le photodétecteur est, par exemple, un phototransistor. Le phototransistor a son circuit émetteur-collecteur alimenté en courant à travers une résistance RP entre la tension Vcc et la terre. Les photons reçus sur la base B du transistor ont pour effet, comme cela est connu, de rendre le phototransistor conducteur. Un courant circule donc par le circuit émetteur -collecteur. Un circuit de détection (un Trigger de Schmitt par exemple) connecté au collecteur permet alors de fournir un signal de détection sur la sortie Vout.

La résistance RD est une résistance de limitation de courant. Elle doit être ajustée de manière à limiter le courant dans la diode émettrice 70. Par exemple, pour une diode émettrice présentant un point de fonctionnement avec un courant TF=20ma et sous une tension VF= 1,2V, et si la tension d'alimentation Vcc est de 5volts, la résistance RD devra avoir pour valeur RD = 190 ohms.

Là résistance RP doit être fixée de manière que le circuit amplificateur sature la sortie du phototransistor lorsque celui-ci est éclairé par la diode émettrice. On doit donc avoir Vcc<RP . Icc. Pour un courant désiré émetteur-collecteur de 80 microampères on doit donc avoir une valeur de la résistance RP telle que:

$$RP < Vcc/Icc \text{ soit } RP > 68 \text{ K}\Omega$$

La figure 7b représente une variante de réalisation du circuit de la figure 7a dans lequel le phototransistor est monté en émetteur commun. Les résistances RD et RP seront calculées de la même manière.

## Revendications

1. Système de détection optique de la commande de freinage d'un véhicule comprenant une pièce mobile de commande de freinage, **caractérisé**

   - **en ce qu'**il comporte un servomoteur d'assistance au freinage (5) couplant une tige de commande (1) à une tige de poussée (62), ledit servomoteur comprenant une jupe (3) séparant une chambre avant d'une chambre arrière du servomoteur ;
   - **en ce qu'**il comporte un dispositif de détection (7) optique de la position de la jupe (3) et ;
   **en ce que** ledit dispositif de détection (7) comporte une source lumineuse (70) et un dispositif photodétecteur (71) , la source lumineuse émettant un faisceau lumineux vers ladite jupe (3) de telle sorte que lorsque le système de freinage est au repos, ladite jupe (3) réfléchit le dit faisceau lumineux vers le dispositif photodétecteur (71).

2. Système de détection optique selon la revendication 1, **caractérisé en ce que** ledit dispositif de détection (7) comporte une source lumineuse (70) et un dispositif photodétecteur (71), la source lumineuse émettant un faisceau lumineux vers le dispositif photodétecteur ; ladite jupe (3) ou une pièce mobile (31) qui lui est solidaire étant située entre la source lumineuse et le dispositif photodétecteur lorsque le système de freinage est au repos, de telle sorte que lorsque le système de freinage est au repos, le dispositif photodétecteur n'est pas éclairé par le faisceau lumineux et que lorsque le système de freinage est actif, le photodétecteur est éclairé par le faisceau lumineux ou inversement.

3. Système de détection optique selon la revendication **1, caractérisé en ce que** le dispositif de détection (7) est fixé à une paroi du servomoteur de façon que la source lumineuse éclaire la jupe (3) du servomoteur.

4. Système de détection optique selon la revendication **3, caractérisé en ce que** la zone de la jupe qui est éclairée par la source lumineuse lorsque le servomoteur est à l'état de repos, comporte une surface réfléchissante.

5. Système de détection optique selon la revendication **2, caractérisé en ce que** ladite pièce mobile (31) formant saillie à la surface de la jupe (3) ou étant commandée par les déplacements de la jupe, et **en ce que** le dispositif de détection (7) est fixé à une paroi du servomoteur.

6. Système de détection optique selon l'une des revendications **4** ou **5, caractérisé en ce que** le dispositif de détection est fixé dans ou sur la paroi arrière (51) du servomoteur.

7. Système de détection optique selon la revendication **6, caractérisé en ce que** ladite paroi comporte une ouverture et **en ce que** le dispositif de détection est fixé dans cette ouverture, un dispositif d'étanchéité étant prévu entre le dispositif de détection et les bords de l'ouverture.

8. Système de détection optique selon la revendication **6, caractérisé en ce que** ladite pièce mobile comporte un levier (33) mobile en rotation autour d'une articulation fixée à ladite paroi, ce levier comprenant un bras d'occultation (35), un bras de levier (36) et un ressort de rappel (37) de telle sorte que, lorsque le système de freinage est au repos, la jupe appuie sur le bras de levier (36) et le bras d'occultation (35) est situé entre la source lumineuse et le dispositif photodétecteur tandis que lorsque le système de freinage est actif, le ressort (37) commande la rotation du levier de façon que le bras d'occultation s'écarte de la source lumineuse et du dispositif photodétecteur.

9. Système de détection optique selon la revendication **6, caractérisé en ce que** la source lumineuse et le dispositif photodétecteur sont contenus dans un boîtier possédant une ouverture qui est orientée vers la jupe et qui est quasiment en contact avec celle-ci lorsque le servomoteur est à l'état de repos.

10. Système de détection optique selon la revendication **1, caractérisé en ce que** la source lumineuse émet ledit faisceau lumineux vers la jupe (3) par l'intermédiaire d'un premier guide optique (170) et **en ce que** le dispositif photodétecteur reçoit, par deuxième guide optique (171), la lumière réfléchie par la pièce mobile.

11. Système de détection optique selon la revendication **2, caractérisé en ce que** la source lumineuse émet ledit faisceau lumineux par l'intermédiaire d'un premier guide optique et **en ce que** le dispositif photodétecteur reçoit, par un deuxième guide optique, la lumière émise par la source lumineuse.

12. Système de détection optique selon l'une quelconque des revendications **10** ou **11, caractérisé en ce que** lesdits premiers et deuxièmes guides sont réalisés sous forme de fibres optiques, une première extrémité de chaque guide étant dirigée vers la pièce mobile, tandis qu'une deuxième extrémité de chaque guide est couplée optiquement à la source lumineuse ou au dispositif photodétecteur.

**Claims**

1. System for optically detecting the command to brake a vehicle, comprising a moving brake-actuating part, **characterized**

 - **in that** it comprises a brake booster (5) coupling a control rod (1) to a push rod (62), the said booster comprising a skirt (3) separating a front chamber from a rear chamber of the booster;
 - **in that** it comprises a device (7) for optically detecting the position of the skirt (3), and;

**in that** the said detection device (7) comprises a light source (70) and a photodetector device (71), the light source emitting a beam of light towards the said skirt (3) such that when the braking system is at rest, the said skirt (3) reflects the said beam of light towards the photodetector device (71).

2. Optical detection system according to Claim 1, **characterized in that** the said detection device (7) comprises a light source (70) and a photodetector device (71), the light source emitting a beam of light towards the photodetector device; the said skirt (3) or moving part (31) secured thereto being situated between the light source and the photodetector device when the braking system is at rest, such that when the braking system is at rest, the photodetector device is not illuminated by the beam of light and such that when the braking system is active, the photodetector is illuminated by the beam of light, or vice versa.

3. Optical detection system according to Claim 1, **characterized in that** the detection device (7) is fixed to a wall of the booster such that the light source illuminates the skirt (3) of the booster.

4. Optical detection device according to Claim 3, **characterized in that** the region of the skirt that is illuminated by the light source when the booster is in the state of rest has a reflective surface.

5. Optical detection system according to Claim 2, **characterized in that** the said moving part (31) projects from the surface of the skirt (3) or is controlled by the movements of the skirt, and **in that** the detection device (7) is fixed to a wall of the booster.

6. Optical detection system according to one of Claims 4 and 5, **characterized in that** the detection device is fixed into or onto the rear wall (51) of the booster.

7. Optical detection system according to Claim 6, **characterized in that** the said wall has an opening and **in that** the detection device is fixed into this opening, a sealing device being provided between the detection device and the edges of the opening.

8. Optical detection system according to Claim 6, **characterized in that** the said moving part comprises a lever (33) able to rotate about an articulation fixed to the said wall, this lever comprising an occulting arm (35), a lever arm (36) and a return spring (37) such that when the braking system is at rest, the skirt presses against the lever arm (36) and the occulting arm (35) is situated between the light source and the photodetector device, whereas when the braking system is active, the spring (37) makes the lever rotate such that the occulting arm moves away from the light source and from the photodetector device.

9. Optical detection system according to Claim 6, **characterized in that** the light source and the photodetector device are contained in a housing that has an opening oriented towards the skirt and which is practically in contact therewith when the booster is in the state of rest.

10. Optical detection system according to Claim 1, **characterized in that** the light source emits the said beam of light towards the skirt (3) via a first optical guide (170), and **in that** the photodetector device receives the light reflected by the moving part via a second optical guide (171).

11. Optical detection system according to Claim 2, **characterized in that** the light source emits the said beam of light via a first optical guide and **in that** the photodetector device receives the light emitted by the light source via a second optical guide.

12. Optical detection system according to either one of Claims 10 and 11, **characterized in that** the said first and second guides are produced in the form of optical fibres, a first end of each guide being directed towards the moving part, while a second end of each guide is optically coupled to the light source or to the photodetector device.

**Patentansprüche**

1. System zur optischen Erfassung der Steuerung der Bremsung eines Fahrzeugs, das ein bewegliches Bremssteuerungsteil aufweist, **dadurch gekennzeichnet, dass**

- es einen Servomotor (5) zur Bremsunterstützung aufweist, der eine Steuerstange (1) an eine Schubstange (62) koppelt, wobei der Servomotor eine Schürze (3) aufweist, die eine vordere Kammer von einer hinteren Kammer des Servomotors trennt,
- es eine Vorrichtung (7) zur optischen Erfassung der Stellung der Schürze (3) aufweist und
- die Erfassungsvorrichtung (7) eine Lichtquelle (70) und eine Fotodetektorvorrichtung (71) aufweist, wobei die Lichtquelle ein Lichtbündel derart zur Schürze (3) emittiert, dass die Schürze (3) das Lichtbündel zur Fotodetektorvorrichtung (71) reflektiert, wenn sich das Bremssystem im Ruhezustand befindet.

2. System zur optischen Erfassung nach Anspruch 1, **dadurch gekennzeichnet, dass** die Erfassungsvorrichtung (7) eine Lichtquelle (70) und eine Fotodetektorvorrichtung (71) aufweist, wobei die Lichtquelle ein Lichtbündel zur Fotodetektorvorrichtung emittiert, wobei die Schürze (3) oder das fest damit verbundene bewegliche Teil (31) zwischen der Lichtquelle und der Fotodetektorvorrichtung liegt, wenn sich das System im Ruhezustand befindet, so dass die Fotodetektorvorrichtung nicht von dem Lichtbündel angestrahlt wird, wenn sich das Bremssystem im Ruhezustand befindet, und der Fotodetektor von dem Lichtbündel angestrahlt wird, wenn das Bremssystem aktiv ist, oder umgekehrt.

3. System zur optischen Erfassung nach Anspruch 1, **dadurch gekennzeichnet, dass** die Erfassungsvorrichtung (7) so an einer Wand des Servomotors befestigt ist, dass die Lichtquelle die Schürze (3) des Servomotors anstrahlt.

4. System zur optischen Erfassung nach Anspruch 3, **dadurch gekennzeichnet, dass** der Bereich der Schürze, der von der Lichtquelle angestrahlt wird, wenn sich der Servomotor im Ruhezustand befindet, eine reflektierende Fläche aufweist.

5. System zur optischen Erfassung nach Anspruch 2, **dadurch gekennzeichnet, dass** das bewegliche Teil (31) von der Fläche der Schürze (3) hervorsteht oder durch die Bewegungen der Schürze gesteuert wird und die Erfassungsvorrichtung (7) an einer Wand des Servomotors befestigt ist.

6. System zur optischen Erfassung nach Anspruch 4 oder 5, **dadurch gekennzeichnet, dass** die Erfassungsvorrichtung in oder an einer hinteren Wand (51) des Servomotors befestigt ist.

7. System zur optischen Erfassung nach Anspruch 6, **dadurch gekennzeichnet, dass** die Wand eine Öffnung aufweist und die Erfassungsvorrichtung in dieser Öffnung befestigt ist, wobei zwischen der Erfassungsvorrichtung und den Rändern der Öffnung eine Abdichtungseinrichtung vorgesehen ist.

8. System zur optischen Erfassung nach Anspruch 6, **dadurch gekennzeichnet, dass** das bewegliche Teil einen Hebel (33) aufweist, der um ein an der Wand befestigtes Gelenk drehbar ist, wobei dieser Hebel einen Abdeckungsarm (35), einen Hebelarm (36) und eine Rückstellfeder (37) aufweist, so dass die Schürze im Ruhezustand des Bremssystems auf den Hebelarm (36) drückt und sich der Abdeckungsarm (35) zwischen der Lichtquelle und der Fotodetektorvorrichtung befindet, während die Feder (37) die Drehung des Hebels bewirkt, wenn das Bremssystem aktiv ist, so dass der Abdeckungsarm sich von der Lichtquelle und der Fotodetektorvorrichtung entfernt.

9. System zur optischen Erfassung nach Anspruch 6, **dadurch gekennzeichnet, dass** die Lichtquelle und die Fotodetektorvorrichtung in einem Gehäuse mit einer Öffnung enthalten sind, die zur Schürze gerichtet ist und quasi mit dieser in Kontakt ist, wenn sich der Servomotor im Ruhezustand befindet.

10. System zur optischen Erfassung nach Anspruch 1, **dadurch gekennzeichnet, dass** die Lichtquelle das Lichtbündel über eine erste optische Führung (170) zur Schürze (3) emittiert und die Fotodetektorvorrichtung das von dem beweglichen Teil reflektierte Licht über eine zweite optische Führung (171) empfängt.

11. System zur optischen Erfassung nach Anspruch 2, **dadurch gekennzeichnet, dass** die Lichtquelle das Lichtbündel über eine erste optische Führung emittiert und die Fotodetektorvorrichtung das von der Lichtquelle emittierte Licht über eine zweite optische Führung empfängt.

12. System zur optischen Erfassung nach Anspruch 10 oder 11, **dadurch gekennzeichnet, dass** die erste und die zweite Führung als Lichtleitfasern ausgebildet sind, wobei ein erstes Ende jeder Führung zum beweglichen Teil ausgerichtet ist, während ein zweites Ende jeder Führung optisch an die Lichtquelle oder die Fotodetektorvorrichtung gekoppelt ist.

Fig. 1

Fig. 2a

Fig. 2b

Fig. 2c

Fig. 2d

Fig. 3a

Fig. 3b

Fig. 4a

Fig. 4b

Fig. 5a

Fig. 5b

Fig. 5c

Fig. 6

Fig. 7a

Fig. 7b

## RÉFÉRENCES CITÉES DANS LA DESCRIPTION

**Documents brevets cités dans la description**

- FR 2834254 A